# FASCICULE DE BREVET EUROPEEN

(11) **EP 1 705 383 B1**
(45) Date de publication et mention de la délivrance du brevet: **23.01.2013**
(21) Numéro de dépôt: 06111325.4
(22) Date de dépôt: 17.03.2006
(51) Int. Cl.: F15B 15/19, F15B 15/20

(54) **Actionneur pyrotechnique muni d'un organe régulateur de pression**
Pyrotechnischer Aktor mit Druckregelorgan
Pyrotechnical actuator having pressure control means

(30) Priorité: 24.03.2005 FR 0502905
(43) Date de publication de la demande: 27.09.2006
(73) Titulaire: HERAKLES, 33185 Le Haillan (FR)
(72) Inventeur: Borg, Evrard, 33127 Martignas Sur Jalle (FR); Laspesa, Eric, 83140 Six Fours Les Plages (FR); Nadeau, Jean-Paul, 83190 Ollioules (FR)
(74) Mandataire: Le Roux, Martine

(56) Documents cités:
- EP-A- 0 550 321
- CH-A5- 568 868
- FR-A- 2 824 875
- FR-A- 2 848 950
- FR-A- 2 857 421
- JP-A- 2000 033 850

## Description

Le domaine technique de l'invention est celui des actionneurs pyrotechniques comprenant un piston et ayant pour fonction essentielle d'exercer une poussée afin de déplacer un objet en faisant émerger le piston. Les actionneurs pyrotechniques selon l'invention sont particulièrement adaptés aux systèmes de sécurité mis en oeuvre dans des véhicules automobiles et destinés, par exemple, à amortir le déplacement de certaines pièces qui ont été mises en mouvement lors d'un choc mécanique du véhicule automobile avec un élément extérieur, comme par exemple une ceinture de sécurité, le bouclier avant du véhicule, la colonne de direction ou le capot du véhicule dans le cas d'une collision frontale entre le véhicule et un piéton.

Les actionneurs pyrotechniques faisant intervenir un piston ont déjà fait l'objet de plusieurs demandes de brevet.

On peut citer le brevet EP 0 550 321 qui décrit un vérin pyrotechnique à course amortie pouvant être utilisé dans tout type de système d'absorption d'énergie. Ce vérin comporte un générateur de gaz pyrotechnique, un piston, une chambre de combustion de matières pyrotechniques et une chambre de contre-pression ainsi qu'une chambre intermédiaire comprise entre ladite chambre de combustion et une extrémité du piston. Un canal relie la chambre intermédiaire à la chambre de contre-pression. Les gaz émis par le générateur mettent sous pression la chambre intermédiaire pour s'opposer au mouvement du piston et ainsi amortir sa course, une partie desdits gaz étant acheminée par le canal vers la chambre de contre-pression.

La demande de brevet JP-A-2000 033850 décrit un actionneur pyrotechnique qui fonctionne selon le même principe. Ledit actionneur comprend un générateur de gaz, un corps, un piston prolongé par une tige apte à se déplacer dans ledit corps sous l'effet des gaz émis par ledit générateur. Un conduit est agencé dans le piston et la tige de façon à mettre en communication la cavité entre le générateur de gaz et le piston, dite première cavité, et la cavité entre la tige et le corps de l'actionneur, dite seconde cavité. Lors du fonctionnement de l'actionneur, en créant ainsi une fuite de gaz de ladite première cavité vers ladite seconde cavité, on amortit la course dudit piston. Après le fonctionnement dudit actionneur, on peut aussi retracter la tige par appui sur la tête agencée en son extrémité, le gaz de la seconde cavité repassant dans la première cavité.

La demande de brevet FR 2 824 875, quant à elle, concerne un actionneur pyrotechnique possédant un corps, un piston, et une rondelle de retenue dudit piston dans ledit corps. Suivant la position initiale du piston dans le corps, l'actionneur peut, soit exercer une poussée sur un objet en faisant émerger ledit piston dudit corps, soit libérer une pièce mécanique en faisant rentrer le piston dans ledit corps.

On peut également mentionner la demande de brevet FR 2 857 421 qui se rapporte à un actionneur pyrotechnique faisant intervenir un dispositif mécanique de régulation de pression dans la chambre de coulissement du piston, permettant de maîtriser l'amplitude de déplacement dudit piston. De cette manière, l'actionneur pyrotechnique est à effet de poussée variable ou même à course paramétrable et peut donc s'adapter à une pluralité de configurations nécessitant un déplacement plus où moins important du piston.

Enfin, on peut souligner le brevet FR 2 848 950 dont l'objet est un prétensionneur de ceinture de sécurité dans un véhicule automobile, fonctionnant à partir d'un actionneur pyrotechnique faisant intervenir un piston de poussée. Ledit actionneur est à effort constant grâce à un organe limiteur de pression placé à l'extérieur dudit actionneur.

Les actionneurs pyrotechniques décrits dans la plupart de ces brevets ne sont pas spécialement conçus dans l'optique d'avoir un encombrement réduit. Les actionneurs pyrotechniques selon l'invention, qui ont la possibilité de fonctionner à effort constant grâce à l'adjonction d'un organe mécanique de régulation de pression, ont notamment la particularité de posséder ledit organe de régulation à l'intérieur du piston. De cette manière, la problème résolu par les actionneurs pyrotechniques selon l'invention est de présenter une course de piston homogène et régulière, à effort constant, sans soubresauts intempestifs, tout en offrant un encombrement réduit, ce qui est particulièrement recherché pour les véhicules automobiles dans lesquels les espaces sont généralement restreints.

L'objet de la présente invention concerne un actionneur pyrotechnique à effort constant comprenant un générateur de gaz pyrotechnique, un corps, un piston apte à se déplacer dans ledit corps sous l'effet des gaz émis par le générateur et un organe régulateur de pression, tel que caractérisé dans la revendication 1.

Préférentiellement, l'organe régulateur est un organe mécanique impliquant plusieurs pièces solides.

Selon un mode de réalisation de l'invention, le générateur de gaz est situé à l'une des deux extrémités du corps et le piston est apte à coulisser de façon hermétique dans ledit corps, la surface externe du piston étant au contact de la surface interne du corps.

De façon avantageuse, l'organe régulateur comprend un obturateur au contact d'un organe précontraint. De façon préférentielle, l'obturateur est une pièce solide amenée à se déplacer sous l'effet des gaz émis par le générateur pyrotechnique.

Avantageusement, le piston et l'obturateur sont coaxiaux et peuvent se déplacer indépendamment l'un de l'autre dans une même direction le long du corps, le piston dans ledit corps et l'obturateur dans ledit piston.

Le piston présente donc une face avant (côté générateur de gaz) traversée par un canal permettant de mettre en communication l'espace séparant le générateur de gaz et ledit piston, et un espace interne du piston dans lequel est logé l'organe régulateur.

De façon avantageuse, la face avant du piston est transversale par rapport à l'axe du corps de l'actionneur, et l'organe précontraint exerce une force de poussée sur l'obturateur pour le maintenir contre le canal. Puisque le piston coulisse de façon hermétique dans le corps, les gaz émis par le générateur de gaz ne peuvent s'échapper que par le canal du piston. De façon préférentielle, l'organe précontraint est constitué par un ressort à spirales.

Avantageusement, l'obturateur est constitué par une bille.

Préférentiellement, des cannelures longitudinales sont pratiquées à l'intérieur du piston pour permettre aux gaz, une fois qu'ils ont repoussé la bille pour l'écarter du canal, de traverser ledit piston.

De façon avantageuse, l'obturateur est un piston régulateur présentant un segment conique dont la partie de plus faible diamètre constitue une extrémité dudit obturateur, permettant d'obturer le canal de la face avant du piston.

De façon préférentielle, le piston possède une face arrière qui est opposée à la face avant, ladite face arrière possédant des fentes d'évacuation des gaz pour permettre auxdits gaz, qui ont repoussé le piston régulateur, de traverser le piston de l'actionneur. Avantageusement, les fentes d'évacuation sont représentées par des arcs de cercle s'inscrivant autour d'un même cercle.

Selon un autre mode de réalisation de l'invention, le piston régulateur présente un corps central autour duquel est disposée une pluralité d'ailettes de manière à laisser passer les gaz une fois qu'ils ont repoussé ledit piston régulateur de l'ouverture. En effet, les espaces entre les ailettes constituent des passages pour les gaz une fois que le piston régulateur a été repoussé du canal.

Avantageusement, le piston régulateur possède quatre ailettes régulièrement espacées autour dudit corps.

Le piston est donc prolongé par une tige creuse de poussée se terminant par une tête élargie, ladite tête possédant des canaux d'évacuation des gaz, et l'espace interne de ladite tige est en communication avec l'espace interne du piston dans lequel est logé l'organe régulateur. De cette manière, les gaz qui ont pénétré dans le piston grâce à l'organe régulateur de pression, se détendent à l'intérieur de la tige pour ensuite être évacués de l'actionneur par l'intermédiaire des canaux d'évacuation de la tête élargie. Cette détente des gaz permet notamment d'atténuer le bruit lors du fonctionnement dudit actionneur.

De façon préférentielle, le générateur de gaz comprend une charge pyrotechnique et un système d'allumage de ladite charge.

Les actionneurs pyrotechniques selon l'invention présentent l'avantage d'être très peu encombrants dans la mesure où l'organe régulateur de pression est totalement inclus dans le piston de l'actionneur. Lesdits actionneurs sont donc parfaitement adaptés aux dispositifs de sécurité embarqués, bénéficiant de peu de place mais devant être performants et fiables. De plus, de par la grande variabilité des compositions pyrotechniques pouvant être utilisées dans les actionneurs selon l'invention, lesdits actionneurs peuvent présenter une multiplicité de caractéristiques en terme de vitesse de réaction, de débit de gaz produit et de force délivrée qui les rend adaptables à un grand nombre de configurations.

On donne ci-après une description détaillée de trois modes de réalisation de l'invention en se référant aux figures de 1 à 6.
La figure 1 est une vue en coupe axiale longitudinale d'un actionneur pyrotechnique selon l'invention, faisant intervenir une bille et un ressort, l'actionneur n'ayant pas fonctionné.
La figure 2 représente l'actionneur de la figure 1 après fonctionnement.
La figure 3 est une vue en coupe axiale longitudinale agrandie du piston de l'actionneur de la figure 1 comportant une bille et un ressort.
La figure 4 est une vue en perspective partielle de l'actionneur de la figure 1.
La figure 5 est une vue en coupe axiale longitudinale du piston d'un actionneur pyrotechnique selon l'invention comportant un piston régulateur étoilé et un ressort.
La figure 6 est une vue en perspective du piston régulateur de la figure 5.
La figure 7 est une vue simplifiée en coupe axiale longitudinale du piston d'un actionneur pyrotechnique selon l'invention comportant un piston régulateur conique et un ressort.
La figure 8 est une vue en coupe axiale latérale de la partie arrière du piston de la figure 7.

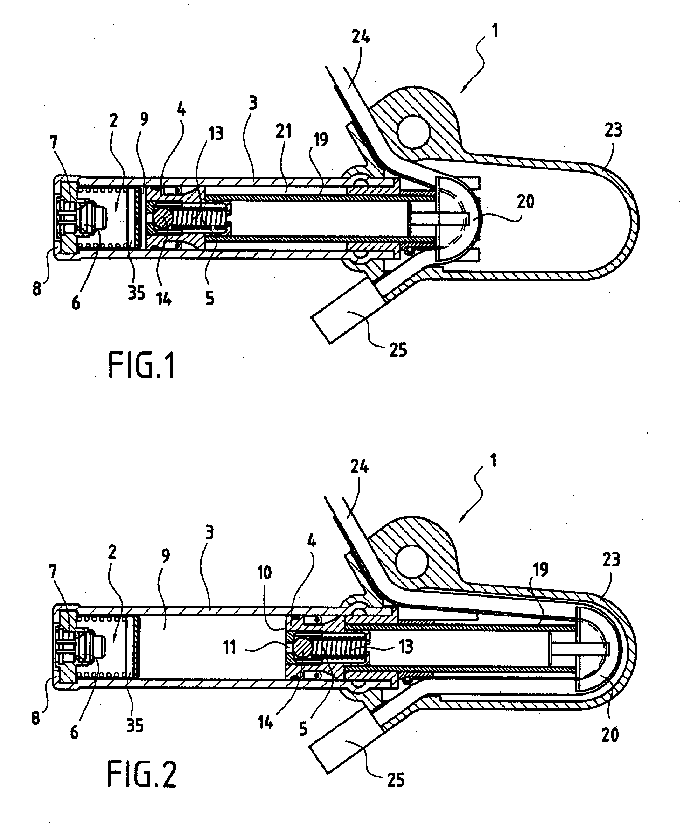

En se référant à la figure 1, un premier mode de réalisation d'un actionneur pyrotechnique 1 selon l'invention comprend un générateur 2 de gaz pyrotechnique, un corps 3, un piston 4 et un organe régulateur 5 de pression. Le générateur 2 de gaz pyrotechnique est constitué par une charge pyrotechnique 35 qui peut, par exemple, être du propergol, et par un allumeur 6 servant à initier ladite charge pyrotechnique 35, ledit allumeur 6 étant doté de deux broches 7 lui permettant d'être connecté à une source électrique extérieure. Le corps 3 possède une extrémité délimitée par une face circulaire, transversale et plane 8, comportant une ouverture circulaire centrale, et le générateur 2 de gaz pyrotechnique est placé à ladite extrémité, à l'intérieur dudit corps 3 et en position centrale, de manière à ce que les deux broches 7 se retrouvent dans l'ouverture centrale et affleurent ladite face 8. De cette manière, lesdites broches 7 sont directement accessibles de l'extérieur de l'actionneur 1 pour être connectées à une source électrique extérieure. Le piston 4 est placé à l'intérieur du corps 3 de l'actionneur 1 et est séparé du générateur 2 de gaz pyrotechnique par un espace libre 9 servant de chambre de combustion 9. Le piston 4 et le corps 3 sont de forme cylindrique et la surface latérale externe dudit piston 4 est au contact de la surface latérale interne dudit corps 3, de manière à ce que ledit piston 4 puisse coulisser de façon hermétique dans ledit corps 3.

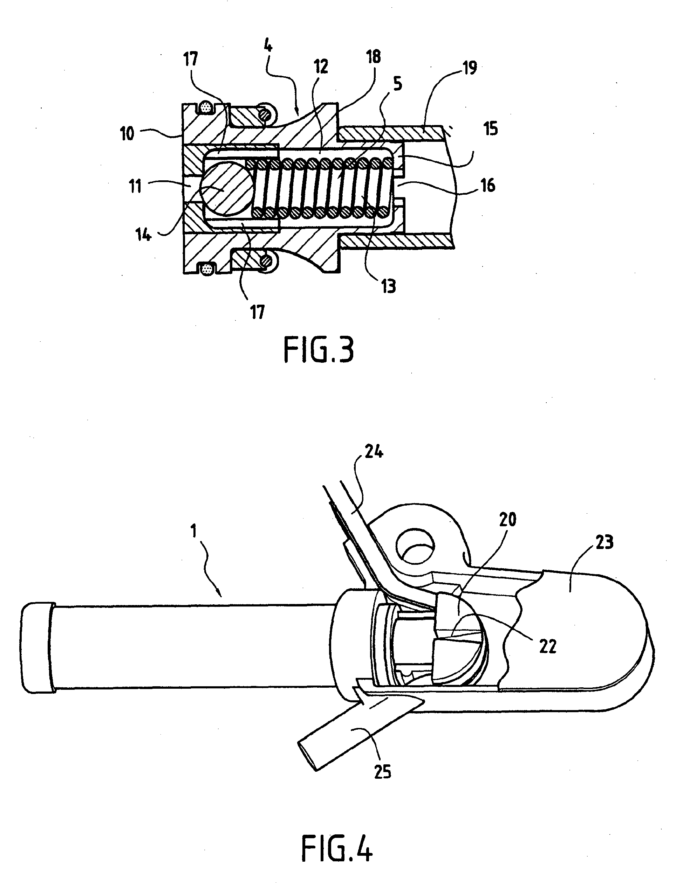

En se référant à la figure 3, le piston 4 présente une face avant 10 transversale de section circulaire, ladite face avant 10 étant traversée par un canal 11 central permettant de mettre en communication l'espace servant de chambre de combustion 9 séparant le générateur 2 de gaz et ledit piston 4, et un espace interne 12 du piston 4 dans lequel est logé l'organe régulateur 5. Ledit espace interne 12 est délimité par la paroi latérale interne du piston 4, ladite paroi possédant une extrémité se terminant par le canal 11 et l'autre extrémité se terminant par une face circulaire transversale 15 munie d'une ouverture 16 centrale. L'organe régulateur 5 comprend une bille 14 et un ressort 13 précontraint, ces deux éléments 13 14 étant agencés l'un par rapport à l'autre de sorte que le ressort 13 vient en appui à la fois contre la face 15 de la paroi interne du piston 4 munie d'une ouverture centrale 16 et contre la bille 14. De cette manière, le ressort 13 exerce une force de poussée sur la bille 14 pour la maintenir contre le canal 11. Des cannelures longitudinales 17 par rapport à l'axe du piston 4, sont pratiquées dans l'espace interne 12 dudit piston 4 où est située la bille 14. La longueur desdites cannelures 17 représentent la moitié de la longueur totale dudit espace interne 12 où sont logés la bille 14 et le ressort 13.

Le piston 4 possède une face arrière 18 opposée à la face avant 10 et de laquelle émerge une tige creuse 19 de poussée se terminant par une tête élargie 20 arrondie dont le diamètre est supérieur à celui du corps 3 de l'actionneur 1. Le diamètre de la tige 19 est inférieur au diamètre du piston 4. L'extrémité de l'espace interne 12 se terminant par la face 15 circulaire transversale munie d'une ouverture centrale 16, débouche à l'intérieur de la tige 19.

La tête élargie 20 de la tige 19 possède deux canaux 22 d'évacuation de gaz reliant l'intérieur de la tige 19 et l'espace environnant de ladite tête 20. L'espace libre 9 servant de chambre de combustion et l'espace libre 21 dans lequel est située ladite tige 19, sont hermétiquement séparés dans le corps 3 par le piston 4.

L'actionneur 1 selon les figures 1, 2 et 4 est présenté pour une utilisation de type prétensionneur de ceinture. Le corps 3 de l'actionneur 1 est prolongé par un carter 23 de forme allongée et ayant une extrémité arrondie. Un câble 24 relié à la ceinture de sécurité traverse ledit carter 23 en passant autour de la tête élargie 20 de la tige 19 du piston 4. Le câble 24 possède une extrémité libre élargie 25 venant en butée contre le carter 23.

Le mode de fonctionnement de ce premier mode de réalisation d'un actionneur pyrotechnique selon l'invention suit les étapes suivantes.

En se référant aux figures 1 et 2, un signal électrique déclenche l'allumeur 6 qui initie la charge pyrotechnique 35 dont les gaz émis mettent sous pression l'espace 9 servant de chambre de combustion. Le piston 4 amorce alors un déplacement dans le corps 3 de l'actionneur 1, tandis qu'une partie des gaz pénètre dans le canal 11 dudit piston 4 et repousse la bille 14 pour dégager ledit canal 11 et permettre ainsi auxdits gaz de s'échapper de la chambre de combustion 9 par l'intérieur du piston 4. De cette façon, la pression de la chambre de combustion 9 est régulée par cette fuite provoquée des gaz, ladite fuite n'étant rendue possible qu'au-delà d'un niveau de pression seuil réglé par la dureté du ressort 13. Les gaz qui ont pénétré dans l'espace interne 12 du piston envahissent l'intérieur de la tige 19 et sont évacués vers l'extérieur de l'actionneur 1 par l'intermédiaire des deux canaux d'évacuation 22 pratiqués dans la tête élargie 20. L'espace interne de la tige 19 sert de chambre de détente pour lesdits gaz et permet ainsi d'atténuer le bruit lors du fonctionnement de l'actionneur 1. La course du piston 4 s'effectue alors à effort constant sur toute la longueur de déplacement dans le corps 3.

Dans l'exemple du prétensionneur de ceinture illustré sur les figures 1, 2 et 4, la tête élargie 20 du piston 4 se déplace à effort constant dans le carter 23, provoquant une traction du câble 24 qui passe autour de ladite tête 20. Cette traction entraîne le déplacement rapide de la ceinture de sécurité car l'une 25 des extrémités du câble 24 est bloquée contre le carter 23. Les gaz qui se sont retrouvés à l'intérieur de la tige 19 du piston 4 sont évacués à l'intérieur du carter 23, permettant de circonscrire au périmètre dudit carter 23 les effets indésirables des produits de combustion constitués par des flammes, des particules incandescentes et des gaz.

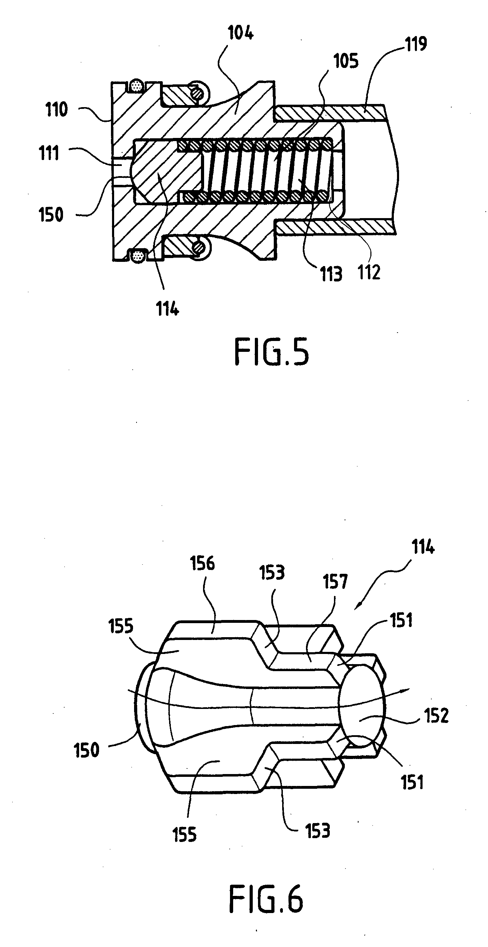

En se référant aux figures 5 et 6, un deuxième mode de réalisation d'un actionneur pyrotechnique selon l'invention se différencie du premier mode de réalisation décrit ci-avant au niveau de l'organe régulateur 105 de pression, pour lequel la bille a été remplacée par un piston régulateur 114. Le piston régulateur 114 comporte un segment conique dont la partie 150 de plus faible diamètre constitue une extrémité dudit piston régulateur 114 permettant d'obturer le canal 111 de la face avant 110 du piston 104. Le piston régulateur 114 comprend un corps central cylindrique allongé 152 autour duquel sont disposées longitudinalement quatre ailettes 155 allongées, régulièrement espacées autour dudit corps. Le piston régulateur 114 possède donc une section en forme de croix comprenant quatre branches 151 disposées entre elles de sorte que deux branches 151 successives font entre elles un angle droit. Chaque ailette 155 présente au milieu de sa plus grande longueur, une cassure 153 permettant de distinguer une zone amont 156 au contact du segment conique, ladite zone 156 correspondant à la partie de l'ailette 155 possédant une grande section, et une zone aval 157 correspondant à la partie de l'ailette 155 de plus petite section. Chaque ailette se caractérise par une longueur qui est sa dimension suivant l'axe longitudinal du piston régulateur 114, une hauteur qui est sa dimension selon un axe radial du piston régulateur 114 et une largeur qui est sa dimension selon une direction qui est à la fois perpendiculaire à l'axe longitudinal et à un axe radial dudit piston régulateur 114. La hauteur de la section de chacune des ailettes 155 au niveau de sa partie amont 156 est telle que ladite ailette 155 est au contact de la paroi latérale interne du piston 104 de l'actionneur. L'espace compris entre ladite paroi latérale interne du piston 104 et la partie aval 157 de chacune des ailettes 155 est occupé par une partie du ressort 113 qui vient en butée contre la cassure 153 de chacune desdites ailettes 155.

Le mode de fonctionnement de ce deuxième mode de réalisation d'un actionneur pyrotechnique selon l'invention est identique à celui décrit pour le premier mode de réalisation.

Un signal électrique déclenche le générateur de gaz pyrotechnique dont les gaz émis mettent sous pression l'espace servant de chambre de combustion. Le piston 104 amorce alors un déplacement dans le corps de l'actionneur, tandis qu'une partie des gaz pénètre dans le canal 111 dudit piston 104, et repousse le piston régulateur 114 pour dégager ledit canal 111, et permettre ainsi auxdits gaz de s'échapper de la chambre de combustion par l'intérieur du piston 104, à travers les espaces situés entre les ailettes 155 du piston régulateur 114. De cette façon, la pression de la chambre de combustion est régulée par cette fuite provoquée des gaz, ladite fuite n'étant rendue possible qu'au-delà d'un niveau de pression seuil réglé par la dureté du ressort 113. Les gaz qui ont pénétré dans l'espace interne du piston 104 envahissent l'intérieur de la tige 119 et sont évacués vers l'extérieur de l'actionneur par l'intermédiaire des deux canaux d'évacuation pratiqués dans la tête élargie de ladite tige 119. La course du piston 104 s'effectue alors à effort constant sur toute la longueur de déplacement dans le corps.

## Revendications

1. Actionneur pyrotechnique (1) à effort constant comprenant :
- un générateur de gaz pyrotechnique (2),
- un corps (3),
- un piston (4 ; 104) apte à se déplacer dans ledit corps (3) sous l'effet des gaz émis par ledit générateur (2), et
- un organe régulateur (5 ; 105) de pression situé à l'intérieur dudit piston (4 ; 104), ledit piston (4 ; 104) présentant une face avant (10 ; 110), côté générateur de gaz (2), traversée par un canal (11 ; 111) permettant de mettre en communication l'espace (9) séparant ledit générateur de gaz (2) et ledit piston (4 ; 104), et un espace interne (12 ; 112) dans lequel est logé ledit organe régulateur (5 ; 105),
- ledit piston (4 ; 104) étant prolongé par une tige creuse (19 ; 119) de poussée se terminant par une tête élargie (20),
- l'espace interne de ladite tige (19 ; 119) étant en communication avec ledit espace interne (12 ; 112) dudit piston (4 ; 104) dans lequel est logé ledit organe régulateur (5 ; 105) ;
**caractérisée en ce que** ladite tête (20) possède des canaux d'évacuation des gaz (22) et **en ce que** lesdits canaux d'évacuation des gaz (22) relient ledit espace interne de ladite tige creuse (19 ; 119) et l'espace environnant de ladite tête élargie (20).

2. Actionneur selon la revendication 1, **caractérisé en ce que** ledit organe régulateur (5 ; 105) comprend un obturateur (14 ; 114) au contact d'un organe précontraint (13 ; 113).

3. Actionneur selon la revendication 2, **caractérisé en ce que** ledit piston (4 ; 104) et ledit obturateur (14 ; 114) sont coaxiaux et peuvent se déplacer indépendamment l'un de l'autre dans la même direction le long dudit corps (3).

4. Actionneur selon la revendication 2 ou 3, **caractérisé en ce que** ladite face avant (10 ; 110) dudit piston (4 ; 104) est transversale par rapport à l'axe dudit corps (3) de l'actionneur (1), et ledit organe précontraint (13 ; 113) exerce une force de poussée sur ledit obturateur (14 ; 114) pour le maintenir contre ledit canal (11 ; 111).

5. Actionneur selon l'une quelconque des revendications 2 à 4, **caractérisé en ce que** ledit organe précontraint (13 ; 113) est constitué par un ressort à spirales.

6. Actionneur selon la revendication 5, **caractérisé en ce que** ledit obturateur (14) est constitué par une bille.

7. Actionneur selon la revendication 6, **caractérisé en ce que** des cannelures longitudinales (17) sont pratiquées à l'intérieur dudit piston (4) pour permettre aux gaz, une fois qu'ils ont repoussé ladite bille (14), de traverser ledit piston (4).

8. Actionneur selon la revendication 5, **caractérisé en ce que** ledit obturateur (114) est un piston régulateur présentant un segment conique dont la partie de plus faible diamètre (150) constitue une extrémité dudit obturateur (114) permettant d'obturer le canal (111) de la face avant (110) du piston (104).

9. Actionneur selon la revendication 8, **caractérisé en ce que** ledit piston régulateur (114) présente un corps central (152) autour duquel est disposée une pluralité d'ailettes (155).

10. Actionneur selon la revendication 9, **caractérisé en ce que** ledit piston régulateur (114) possède quatre ailettes (155) régulièrement espacées autour dudit corps (152).

11. Actionneur selon l'une quelconque des revendications 1 à 10, **caractérisé en ce que** ledit générateur de gaz (2) comprend une charge pyrotechnique (35) et un système d'allumage de ladite charge (35).

## Claims

1. A constant force pyrotechnic actuator (1) comprising:
- a pyrotechnic gas generator (2),
- a body (3),
- a piston (4; 104) capable of moving in the said body (3) under the effect of the gases emitted by the generator (2), and
- a pressure regulator member (5; 105) situated inside the piston (4; 104), the said piston (4; 104) having a front face (10; 110), on the side of the gas generator (2), traversed by a duct (11; 111) making it possible to place in communication the space (9) separating the said gas generator (2) and the said piston (4; 104), and an inner space (12; 112) in which the regulator member (5; 105) is housed,
- the said piston (4; 104) being extended by a hollow push rod (19; 119) terminating in an enlarged head (20),
- the inner space of the said rod (19; 119) being in communication with the inner space (12; 112) of the piston (4; 104) in which the regulator member (5; 105) is housed,
**characterized in that** said head (20) has gas discharge ducts (22), and **in that** the said gas discharge ducts (22) connect the said inner space of the said rod (19; 119) and the space surrounding the said enlarged head (20).

2. The actuator according to claim 1, **characterized in that** the said regulator member (5; 105) comprises a stopper (14; 114) in contact with a prestressed member (13; 113).

3. The actuator according to claim 2, **characterized in that** the said piston (4; 104) and the said stopper (14; 114) are coaxial and can move independently of one another in the same direction along the said body (3).

4. The actuator according to claim 2 or 3, **characterized in that** the said front face (10; 110) of the piston (4; 104) is transverse relative to the axis of the said body (3) of the actuator (1), and the said prestressed member (13; 113) exerts a pushing force on the stopper (14; 114) to hold it against the said duct (11; 111).

5. The actuator according to any one of claims 2 to 4, **characterized in that** the said prestressed member (13; 113) consists of a coil spring.

6. The actuator according to claim 5, **characterized in that** the said stopper (14) consists of a ball.

7. The actuator according to claim 6, **characterized in that** longitudinal splines (17) are made inside the said piston (4) to allow the gases, once they have pushed away the said ball (14), to pass through the said piston (4).

8. The actuator according to claim 5, **characterized in that** the said stopper (114) is a regulator piston having a conical segment whose smallest diameter part (150) forms one end of the said stopper (114) making it possible to close off the duct (111) of the front face (110) of the piston (104).

9. The actuator according to claim 8, **characterized in that** the said regulator piston (114) has a central body (152) around which a plurality of fins (155) is placed.

10. The actuator according to claim 9, **characterized in that** the said regulator piston (114) has four fins (155) evenly spaced around the said body (152).

11. The actuator according to any one of claims 1 to 10, **characterized in that** the said gas generator (2) comprises a pyrotechnic charge (35) and a system for igniting the said charge (35).

## Patentansprüche

1. Pyrotechnischer Aktor (1) mit konstanter Kraft, umfassend:
- einen pyrotechnischen Gasgenerator (2),
- einen Körper (3),
- einen Kolben (4; 104), der geeignet ist, sich unter der Wirkung der durch den Generator (2) ausgestoßenen Gase in dem Körper (3) zu bewegen, und
- ein Druckregelungssystem (5; 105), das innerhalb des Kolbens (4; 104) gelegen ist, wobei der Kolben (4; 104) eine Vorderseite (10; 110) auf der Seite des Gasgenerators (2) aufweist, die von einem Kanal (11; 111) durchquert ist, der ermöglicht, den Raum (9), welcher den Gasgenerator (2) und den Kolben (4; 104) trennt, und einen Innenraum (12; 112), in dem das Regelungsorgan (5; 105) aufgenommen ist, in Verbindung zu bringen,
- wobei der Kolben (4; 104) durch eine hohle Schubstange (19; 119), die mit einen erweiterten Kopf (20) abschließt, fortgesetzt ist,
- wobei der Innenraum der Stange (19; 119) mit dem Innenraum (12; 112) des Kolbens (4; 104), in dem das Regelungsorgan (5; 105) aufgenommen ist, in Verbindung steht,
**dadurch gekennzeichnet, daß** der Kopf (20) Kanäle zum Ableiten der Gase (22) besitzt und daß die Gasableitungskanäle (22) den Innenraum der hohlen Stange (19; 119) und den umgebenden Raum des erweiterten Kopfes (20) verbinden.

2. Aktor nach Anspruch 1, **dadurch gekennzeichnet, daß** das Regelungsorgan (5; 105) ein Absperrorgan (14; 114), das mit einem vorgespannten Organ (13; 113) in Kontakt ist, umfaßt.

3. Aktor nach Anspruch 2, **dadurch gekennzeichnet, daß** der Kolben (4; 104) und das Absperrorgan (14; 114) koaxial sind und sich unabhängig voneinander in der gleichen Richtung entlang des Körpers (3) bewegen können.

4. Aktor nach Anspruch 2 oder 3, **dadurch gekennzeichnet, daß** die Vorderseite (10; 110) des Kolbens (4; 104) gegenüber der Achse des Körpers (3) des Aktors (1) quer verläuft und das vorgespannte Organ (13; 113) eine Schubkraft auf das Absperrorgan (14; 114) ausübt, um es an dem Kanal (11; 111) zu halten.

5. Aktor nach einem der Ansprüche 2 bis 4, **dadurch gekennzeichnet, daß** das vorgespannte Organ (13; 113) durch eine Schraubenfeder gebildet ist.

6. Aktor nach Anspruch 5, **dadurch gekennzeichnet, daß** das Absperrorgan (14) durch eine Kugel gebildet ist.

7. Aktor nach Anspruch 6, **dadurch gekennzeichnet, daß** in dem Kolben (4) Längsrillen (17) ausgebildet sind, um den Gasen, sobald sie die Kugel (14) zurückgedrängt haben, zu ermöglichen, den Kolben (4) zu durchqueren.

8. Aktor nach Anspruch 5, **dadurch gekennzeichnet, daß** das Absperrorgan (114) ein Regelungskolben ist, der einen konischen Abschnitt aufweist, dessen Teil mit geringstem Durchmesser (150) ein Ende des Absperrorgans (114) bildet, das ermöglicht, den Kanal (111) der Vorderseite (110) des Kolbens (104) zu verschließen.

9. Aktor nach Anspruch 8, **dadurch gekennzeichnet, daß** der Regelungskolben (114) einen mittleren Körper (152) aufweist, um den herum eine Vielzahl von Flügeln (155) angeordnet ist.

10. Aktor nach Anspruch 9, **dadurch gekennzeichnet, daß** der Regelungskolben (114) vier um den Körper (152) gleichmäßig beabstandete Flügel (155) besitzt.

11. Aktor nach einem der Ansprüche 1 bis 10, **dadurch gekennzeichnet, daß** der Gasgenerator (2) eine pyrotechnische Ladung (35) und ein System zum Zünden der Ladung (35) umfaßt.
